# EUROPÄISCHE PATENTSCHRIFT

(11) **EP 1 513 713 B1**
(45) Veröffentlichungstag und Bekanntmachung des Hinweises auf die Patenterteilung: **04.01.2006**
(21) Anmeldenummer: 03759865.3
(22) Anmeldetag: 17.06.2003
(51) Int. Cl.: B60T 7/06, B60R 21/09

(54) **SICHERHEITSVORRICHTUNG ZUM ENTFERNEN EINES BOLZENS, INSBESONDERE EINES PEDALBOLZENS BEI EINEM KRAFTFAHRZEUG**
SAFETY DEVICE FOR REMOVING A PIN, ESPECIALLY A PEDAL PIN IN A MOTOR VEHICLE
DISPOSITIF DE SECURITE DESTINE A ELOIGNER UNE BROCHE, EN PARTICULIER UNE BROCHE DE PEDALE DANS UN VEHICULE A MOTEUR

(30) Priorität: 17.06.2002 DE 10227015
(43) Veröffentlichungstag der Anmeldung: 16.03.2005
(73) Patentinhaber: ZF Lemförder Metallwaren AG, 49448 Lemförde (DE)
(72) Erfinder: BURGSTALER, Andree, 32351 Dielingen (DE); DÜTZ, Jan, 49401 Damme (DE); PAPKE, Simone, 49076 Osnabrück (DE)
(86) Internationale Anmeldenummer: PCT/DE2003/002028
(87) Internationale Veröffentlichungsnummer: WO 2003/106234

(56) Entgegenhaltungen:
- EP-A- 0 827 874
- EP-A- 1 031 485
- DE-A- 10 057 227
- DE-C- 19 617 372
- FR-A- 2 739 077

## Beschreibung

Die Erfindung betrifft eine Sicherheitsvorrichtung zum Entfernen eines Bolzens, insbesondere eines Pedalbolzens bei einem Kraftfahrzeug, mit mindestens einem ersten Lagerteil, welches mindestens eine Durchgangsbohrung für eine Bolzenverbindung zu mindestens einem Anschlussteil aufweist, sowie mindestens einen Bolzen, welcher sich koaxial durch die Durchgangsbohrung erstreckt, um das Lagerteil und das Anschlussteil miteinander zu verbinden, wobei Mittel zum Entfernen des Bolzens für ein Lösen des Anschlussteils zur Realisierung einer Sicherheitsfunktion vorgesehen sind.

Derartige Sicherheitsvorrichtungen kommen unter anderem im Fußraum von Fahrgastzellen in Kraftfahrzeugen in Verbindung mit Pedalverbindungen über einen Bolzen zur Vermeidung von Verletzungsrisiken aufgrund von Aufprallunfällen zum Einsatz. Die Verletzungsrisiken liegen darin begründet, dass bei einem Aufprallunfall die Insassen nicht in der Lage sind, die auftretenden Beschleunigungskräfte abzufangen, so dass unter anderem die unteren Extremitäten der im Frontbereich sitzenden Personen in den Fußraum hinein geschleudert werden. Zusätzlich kommt bei einem Unfall hinzu, dass eine Verformung des Vorderwagens sich unmittelbar oder mittelbar auf die Pedale auswirkt und diese in den Fußraum des Kraftfahrzeuges hinein bewegt. Die in der Folge entstehenden Verletzungen sind für den oder die Betroffenen schmerzhaft und können sogar bis zu lebenslangen Verstümmelungen führen.

Um diesen Umstand entgegenzuwirken sind aus dem Stand der Technik unterschiedliche Lösungen bekannt. Hauptsächlich werden zwei Arten von Sicherheitsvorrichtungen unterschieden. Zum einen wird durch Knicken beziehungsweise Wegbiegen eines Anschlussteils - beispielsweise einer Druckstange - vermieden, dass sich das Pedal in Richtung Fahrzeuginnenraum bewegt, zum anderen wird durch Öffnen der Pedallagerstelle, hervorgerufen durch Deformation - beispielsweise Verbiegen - von Strukturteilen - beispielsweise Blechen - ein Eindringen des Pedals in den Fahrzeuginnenraum verhindert. Der zweite Ansatz wird hier weiterverfolgt.

Aus der DE 100 40 043 C1 ist eine Sicherheitsvorrichtung bekannt, welche durch Öffnen der Pedallagerstelle ein Eindringen des Pedals in den Fußraum verhindert. Die Sicherheitsvorrichtung umfasst einen Lagerbock, in dem die um eine Achse schwenkbaren Pedale auf Bolzen, welche in den Aufnahmen des Lagerbocks festgelegt sind, gelagert sind. Dabei weist der Lagerbock zumindest einen aufweitbaren Abschnitt auf, sodass die bei einem Unfall von außen aufgebrachte Krafteinwirkung zu einer Deformation der vorderen Spritzwand führt und in Folge dessen den Lagerbock aufweitet oder spreizt. Die Aufweitung kann mittels eines keilförmigen Elementes erfolgen, welches zwischen die Schenkel eines Lagerbocks getrieben wird. Die hierzu erforderliche kinetische Energie wird aus der Bewegung der sich bei einem Unfall relativ zueinander verformenden Kraftfahrzeugteile gewonnen. Damit erfolgt die Freigabe der die Fußpedale lagernden Bolzen so, dass die Pedale mit dem Bolzen aus ihrer Halterung gelöst werden und nicht in den Fußraum eindringen.

Um sicher zu stellen, dass die Pedale im Falle eines Crashs in Richtung des Fahrzeugbodens bewegt werden, ist üblicherweise ein Pedalniederhalter vorhanden.

EP 1 031 485 A2 offenbart eine gattungsgemäße Sicherheitsvorrichtung zum Entfernen eines Lagerbolzens.

Bei der bekannten Sicherheitsvorrichtung tritt der Nachteil auf, dass zumindest die Verformungsbereiche aus metallischem Werkstoff hergestellt werden müssen und dadurch ein relativ hohes Gewicht des Lagerteils hervorgerufen wird. Zudem ist der Montageaufwand der bekannten Sicherheitsvorrichtung relativ hoch und benötigt mit einem Pedalniederhalter und Trennelement relativ viel Bauraum.

Es ist daher die Aufgabe der vorliegenden Erfindung eine Sicherheitsvorrichtung zu schaffen, die durch ihre kompakte Bauweise wenig Bauraum benötigt, einfach zu montieren ist und vor allem gewichtsparend realisiert werden kann.

Diese Aufgabe wird ausgehend von einer Sicherheitsvorrichtung gemäß dem Oberbegriff des Anspruchs 1 in Verbindung mit dessen kennzeichnenden Merkmalen gelöst. Vorteilhafte Weiterbildungen der Erfindung sind in den abhängigen Ansprüchen angegeben.

Die Erfindung schließt die technische Lehre ein, dass wenigstens ein Mittel zum Entfernen des Lagerbolzens mindestens ein Schiebeelement umfasst, welches einen in Richtung der axialen Bolzenachse komprimierbaren Lagerbolzen bei Krafteinwirkung über mindestens eine zur Bolzenachse schiefe Ebene zusammendrückt und den Lagerbolzen in dem zusammengedrückten Zustand aus dem Lagerteil herausführt, um dadurch die Lagerstelle zu öffnen.

Diese Lösung bietet den Vorteil, dass die Sicherheitsvorrichtung zur Realisierung der Sicherheitsfunktion nur geringe Kräfte benötigt, wodurch eine sichere und zuverlässige Auslösung gewährleistet ist.

Ein weiterer Vorteil ist, dass die Sicherheitsvorrichtung sehr kompakt aufgebaut ist und daher wenig Bauraum benötigt.

Eine weitere die Erfindung verbessernde Maßnahme sieht vor, dass der Lagerbolzen ein in axialer Richtung plastisch komprimierbarer Bolzen ist. Dadurch ist gewährleistet, dass sich der komprimierte Bolzen leicht aus dem Schiebeelement herausnehmen lässt, ohne dass spezielle Vorrichtungen benötigt werden.

Nach einer möglichen Weiterbildung der Erfindung wird vorgeschlagen, dass der Lagebolzen ein in axialer Richtung elastisch komprimierbarer Bolzen ist, da er sich so wiederverwenden lässt und damit ein Beitrag zum Umweltschutz realisiert wird.

Es ist aus Kostengründen von besonderem Vorteil, wenn der Lagerbolzen beispielsweise einen zylindrischen Körper aufweist, der zumindest auf einer Seite in einem Rohrstück mit einem Rohrstückboden geführt ist, wobei eine Druckfeder zwischen dem Rohrstückboden und der in dem Rohrstück geführten Stirnfläche des Lagerbolzens vorhanden ist.

Eine vorteilhafte Ausführungsform des Lagerbolzen ist es ferner, wenn dieser als Mittelstück ein Rillrohr aufweist, welches plastisch verformbar ist, da so eine einfach zu montierende und kostengünstige Lösung realisiert werden kann.

Von besonderem Vorteil ist es, wenn der Lagerbolzen ein mehrteiliger, komprimierbarer Bolzen ist, der mittig einen zylinderformigen Körper aufweist, der auf jeder Seite ein Rohrstück führt, wobei zwischen dem zylindrischen Körper und dem Rohrstückboden eine Druckfeder vorhanden ist, sodass stets ein Kontakt zwischen der Innenfläche des Rohrstücks und der Außenfläche des zylindrischen Körpers besteht Hierdurch ist die Sicherheitsvorrichtung durch standardisierte und/oder genormte Teile herstellbar und lässt sich über die verschiedenen Bauteile leicht an verschiedene Gegebenheiten anpassen.

Schließlich ist es von Vorteil, wenn das Anschlussteil ein in einer Fahrgastzelle eines Kraftfahrzeugs befindliches Fußpedal ist, wobei das Lagerteil ein U-förmiger Lagerbock ist.

Weitere die Erfindung verbessernde Maßnahmen sind in den Unteransprüchen angegeben oder werden nachstehend gemeinsam mit der Beschreibung eines bevorzugten Ausführungsbeispiels der Erfindung anhand der Figuren näher dargestellt.

Es zeigen:
- Fig. 1: ein Schnitt durch eine Prinzipdarstellung einer Sicherheitsvorrichtung,
- Fig. 2: eine Vorderansicht eines Lagerbolzen mit Rillrohr
und
- Fig. 3: einen Schnitt durch eine Prinzipdarstellung eines Lagerbolzens

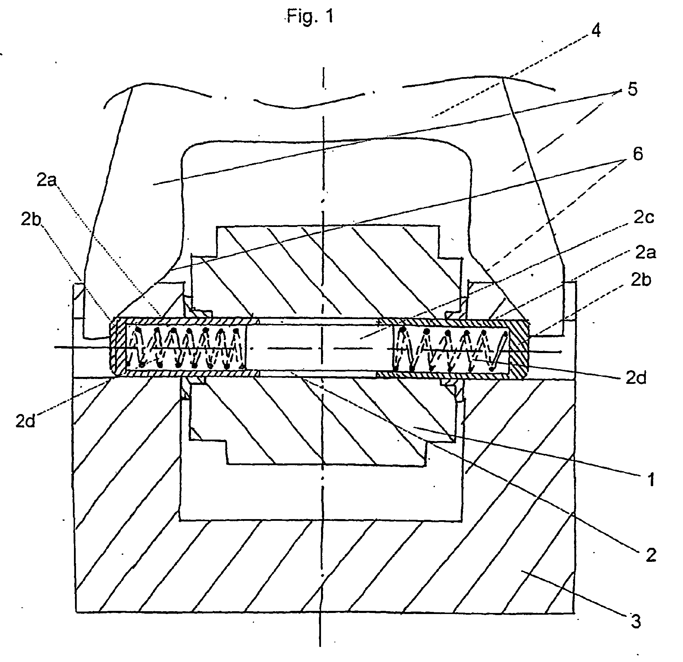

Die Sicherheitsvorrichtung nach Fig. 1 besteht aus einem als Pedal ausgebildeten Anschlussteil 1, welches über einen Lagerbolzen 2 mit einem Lagerteil 3 in Form eines U-förmig ausgebildeten Lagerbocks verbunden ist. Der Lagerbolzen 2 ist über ein Schiebeelement 4 in dem Lagerteil 3 beidseitig gegen Verschiebung in axialer Bolzenrichtung fixiert. Das Schiebeelement 4 weist zwei Schenkel 5 auf, die anfangs parallel beabstandet sind und die an ihrem Ende als schiefe Ebene 6 ausgebildet sind und ein Widerlager zu den Lagerbolzenenden bilden, an dem der Lagerbolzen 2 entlang gleiten kann. Der Abstand der beiden Schenkel 5 des Schiebeelements 4 muss kleiner als der entsprechende Abstand der beiden Schenkel des U-förmigen Lagerteils 3 sein. Der Lagerbolzen 2 besteht aus zwei äußeren Rohrstücken 2a, deren Ende jeweils durch einen Rohrstückboden 2b geschlossen ist, welche auf einem zylindrischen Körper 2c geführt sind und zueinander einen Abstand aufweisen. Zwischen der Innenseite der Rohrstückböden 2b und dem zylindrischen Körper 2c befindet sich auf jeder Seite ein Federpaket 2d - beispielsweise eine Druckfeder - , das ein Zusammendrücken der beiden beabstandeten Rohrstücke 2a gegen die Federkraft der beiden Federpakete 2d ermöglicht. Im Falle eines Aufprallunfalls wird nun das Lagerteil 3 gegen das an einem Stützteil (nicht dargestellt), welches bei einem Aufprallunfall keine oder nur geringe Lageänderungen erfährt, abgestützte Schiebeelement 4 gedrückt. Die bei dieser Relativbewegung des Lagerteils 3 und des Schiebeelements 4 zueinander entstehenden Kräfte werden über die als schiefe Ebene 6 ausgebildeten Fläche der Schenkel 5 des Schiebeelements 4 auf den kompressiblen Lagerbolzen 2 übertragen, wodurch dieser während des Verschiebens entlang der schiefen Ebenen 6 zusammengedrückt wird, bis er zwischen die Schenkel des U-förmigen Lagerteils 3 passt und die Lagerstelle geöffnet ist.

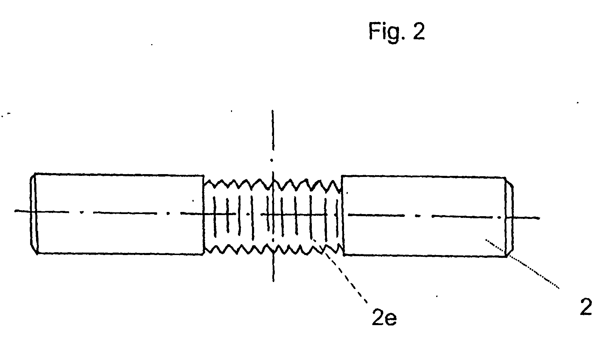

In Figur 2 ist eine alternative Ausführungsform des Lagerbolzens 2 dargestellt. Hier ist der Mittelteil des Lagerbolzens 2 als Rillrohr 2e ausgeführt, welches im Falle eines Crashs plastisch verformt wird.

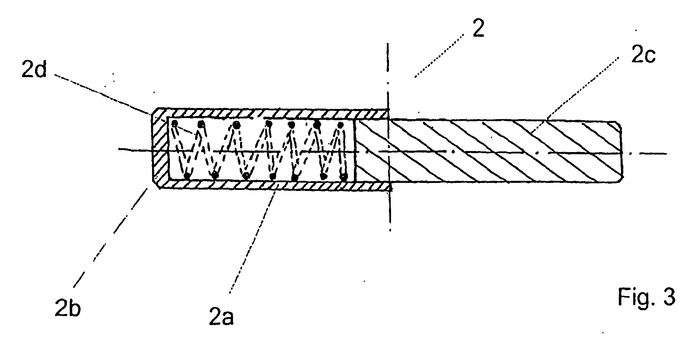

Figur 3 zeigt eine weitere mögliche Ausbildung des Lagerbolzens 2. Hierbei weist der Lagerbolzen 2 einseitig ein zylindrisches Rohrstück 2a mit einem Rohrstückboden 2b auf, welches auf einem zylindrischen Körper 2c verschiebbar geführt wird. Zwischen dem zylindrischen Körper 2c und der Innenseite des Rohrstückbodens 2b befindet sich ein Federpaket 2d, welches einem Zusammendrücken des Lagerbolzens 2 entgegenwirkt.

### Bezugszeichenliste

- **1**: Anschlussteil
- **2**: Lagerbolzen
- **2a**: Rohrstück
- **2b**: Rohrstückboden
- **2c**: Zylindrischer Körper
- **2d**: Federpaket
- **2e**: Rillrohr
- **3**: Lagerteil
- **4**: Schiebeelement
- **5**: Schenkel (des Schiebeelements)
- **6**: schiefe Ebene

## Patentansprüche

1. Sicherheitsvorrichtung zum Entfernen eines Lagerbolzens (2), insbesondere eines Pedalbolzens bei einem Kraftfahrzeug, mit mindestens einem ersten Lagerteil (3), welches mindestens eine Durchgangsbohrung für eine Bolzenverbindung zu mindestens einem Anschlussteil (1) aufweist, sowie mindestens einem Lagerbolzen (2) wobei Mittel zum Entfernen des Lagerbolzens (2) für ein Lösen des Anschlussteils (I) zur Realisierung einer Sicherheitsfunktion vorgesehen sind, wobei
wenigstens ein Mittel zum Entfernen des Lagerbolzens (2) mindestens ein Schiebeelement (4) umfasst, **dadurch gekennzeichnet, dass** der Lagerbolzen sich durch die Durchgangsbohrung erstreckt, um das Lagerteil (3) und das Anschlussteil (I) miteinander zu verbinden und das Schiebeelement bei Krafteinwirkung einen in Richtung der axialen Bolzenachse komprimierbaren Lagerbolzen (2) über mindestens eine zur Bolzenachse schiefe Ebene (6) zusammendrückt und den Lagerbolzen (2) in dem zusammengedrückten Zustand aus dem Lagerteil (3) herausführt, um **dadurch** die Lagerstelle zu öffnen.

2. Sicherheitsvorrichtung nach Anspruch 1, **dadurch gekennzeichnet,**
**dass** der Lagerbolzen (2) ein in axialer Richtung plastisch komprimierbarer Bolzen ist.

3. Sicherheitsvorrichtung nach Anspruch 1, **dadurch gekennzeichnet,**
**dass** der Lagerbolzen (2) ein in axiale Richtung elastisch komprimierbarer Lagerbolzen ist.

4. Sicherheitsvorrichtung nach Anspruch 1, **dadurch gekennzeichnet,**
**dass** der Lagerbolzen (2) einen zylindrischen Körper (2c), der zumindest auf einer Seite in einem Rohrstück (2a) mit einem Rohrstückboden (2b) geführt ist und eine Druckfeder (2d) zwischen der Innenseite des Rohrstückbodens (2b) und der in dem Rohrstück (2a) geführten Stirnfläche des zylindrischen Körpers (2c) aufweist.

5. Sicherheitsvorrichtung nach Anspruch 2, **dadurch gekennzeichnet,**
**dass** der Lagerbolzen (2) als Mittelstück ein Rillrohr (2e) aufweist, welches plastisch verformbar ist.

6. Sicherheitsvorrichtung nach Anspruch 1, **dadurch gekennzeichnet,**
**dass** der Lagerbolzen (2) ein mehrteiliger, komprimierbarer Bolzen ist, der mittig einen zylindrischen Körper (2c) aufweist, der auf jeder Seite ein Rohrstück führt, das zwischen dem zylindrischen Körper (2c) und dem Rohrstückboden (2b) eine Druckfeder (2d) aufweist und auf dem zylindrischen Körper (2c) so verschiebbar ist, dass stets ein Kontakt zwischen der Innenfläche des Rohrstücks und der Außenfläche des zylindrischen Körpers (2c) besteht.

7. Sicherheitsvorrichtung nach Anspruch 1, **dadurch gekennzeichnet,**
**dass** das Anschlussteil (1) ein in einer Fahrgastzelle eines Kraftfahrzeugs befindliches Fußpedal ist, wobei das Lagerteil (3) ein U-förmiger Lagerbock ist.

## Claims

1. Safety device for removing a bearing pin (2), especially a pedal pin in a motor vehicle, with at least one first bearing part (3), which has at least one through-bore for a pin connection to at least one connecting part (1), and at least one bearing pin (2), wherein means are provided for removing the bearing pin (2) for freeing the connecting part (1) to implement a safety function, wherein at least one means for removing the bearing pin (2) comprises at least one sliding element (4),
**characterised in**
**that** the bearing pin extends through the through-bore in order to connect the bearing part (3) and the connecting part (1) together, and the sliding element compresses a bearing pin (2) compressible in the direction of the axial pin axis upon the action of force via at least one plane (6) inclined relative to the pin axis and removes the bearing pin (2) in the compressed state from the bearing part (3) in order to thereby open the bearing point.

2. Safety device according to Claim 1, **characterised in that** the bearing pin (2) is a pin which can be plastically compressed in the axial direction.

3. Safety device according to Claim 1, **characterised in that** the bearing pin (2) is a bearing pin which can be elastically compressed in the axial direction.

4. Safety device according to Claim 1, **characterised in that** the bearing pin (2) has a cylindrical body (2c), which is carried at least on one side in a tube length (2a) with a tube length bottom (2b), and a compression spring (2d) between the inside of the tube length bottom (2b) and the end face, which is carried in the tube length (2a), of the cylindrical body (2c).

5. Safety device according to Claim 2, **characterised in that** the bearing pin (2) has, as centre piece, a grooved tube (2e) which can be plastically deformed.

6. Safety device according to Claim 1, **characterised in that** the bearing pin (2) is a multi-part, compressible pin having in the centre a cylindrical body (2c) which carries a tube length on each side, the latter having a compression spring (2d) between the cylindrical body (2c) and the tube length bottom (2b) and being displaceable on the cylindrical body (2c) such that there is always contact between the inner face of the tube length and the outer face of the cylindrical body (2c).

7. Safety device according to Claim 1, **characterised in that** the connecting part (1) is a foot pedal which is located in a passenger compartment of a motor vehicle, wherein the bearing part (3) is a U-shaped bearing block.

## Revendications

1. Dispositif de sécurité destiné à déboîter une broche d'articulation (2), en particulier une broche d'une pédale d'un véhicule automobile, comprenant au moins un premier élément de support (3) qui comporte au moins un trou débouchant permettant un assemblage par broche avec au moins un élément d'accouplement (1), ainsi qu'au moins une broche d'articulation (2), des moyens permettant de déboîter la broche d'articulation (2) étant prévus en vue de libérer l'élément d'accouplement (1) de façon à réaliser une fonction de sécurité, au moins un moyen de déboîtement de la broche d'articulation (2) comprenant au moins un élément poussoir (4),
**caractérisé en ce que** la broche d'articulation s'étend à travers le trou débouchant de façon à relier l'élément de support (3) et l'élément d'accouplement (1) l'un à l'autre, et qu'en cas d'application de forces, l'élément poussoir comprime une broche d'articulation (2) compressible dans le sens de l'axe axial de la broche par l'intermédiaire d'au moins un plan (6) incliné par rapport à l'axe de la broche, et déboîte la broche d'articulation (2) à l'état comprimé hors de l'élément de support (3), de manière à défaire le point d'articulation.

2. Dispositif de sécurité selon la revendication 1, **caractérisé en ce que** la broche d'articulation (2) est une broche compressible de façon plastique dans le sens axial.

3. Dispositif de sécurité selon la revendication 1, **caractérisé en ce que** la broche d'articulation (2) est une broche élastiquement compressible dans le sens axial.

4. Dispositif de sécurité selon la revendication 1, **caractérisé en ce que** la broche d'articulation (2) comprend un corps cylindrique (2c) guidé d'un côté au moins dans un tronçon de tube (2a) comportant un fond de tronçon de tube (2b), et un ressort de pression (2d) disposé entre la face intérieure du fond de tronçon de tube (2b) et la face frontale du corps cylindrique (2c), face qui est guidée dans le tronçon de tube (2a).

5. Dispositif de sécurité selon la revendication 2, **caractérisé en ce que** la broche d'articulation (2) comporte un tube cannelé (2e) formant la pièce centrale et étant déformable de façon plastique

6. Dispositif de sécurité selon la revendication 1, **caractérisé en ce que** la broche d'articulation (2) est une broche compressible en plusieurs parties, qui comporte un corps central cylindrique (2c) portant un tronçon de tube des deux côtés, les tubes contenant un ressort de pression (2d) disposé entre le corps cylindrique (2c) et le fond du tronçon de tube (2b), et coulissant sur le corps cylindrique (2c) de manière telle qu'un contact entre la surface intérieure du tronçon de tube et la surface extérieure du corps cylindrique (2c) soit maintenu en permanence.

7. Dispositif de sécurité selon la revendication 1, **caractérisé en ce que** l'élément d'accouplement (1) est une pédale disposée dans l'habitacle d'un véhicule automobile, l'élément de support (3) étant un chevalet de support en forme de U.
